# EUROPEAN PATENT APPLICATION

(11) **EP 4 823 188 A1**
(43) Date of publication of application: **14.10.2026**
(21) Application number: 23960510.8
(22) Date of filing: 06.12.2023
(51) Int. Cl.: H04W 52/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: RGTH
(86) International application number: PCT/CN2023/136882
(87) International publication number: WO 2025/118198

(57) **Abstract**

Provided are a wireless communication method and a communication device. The method comprises: an auxiliary node sends a first signal to a first device, wherein the first signal is used for one or more of the following: providing to the first device energy and/or power for communication with a second device; and waking up the first device to communicate with e second device. In embodiments of the present application, an auxiliary node may control a first device, for example, provide energy and/or power to the first device, or for another example, wake up the first device. Compared with a conventional solution, controlling a first device by a second device can relax the requirement on the distance between the first device and the second device, and improve the flexibility of communication between the first device and the second device.

## Description

### TECHNICAL FIELD

This application relates to the field of communications technologies, and more specifically, to a wireless communication method and a communications device.

### BACKGROUND

In some scenarios, a second device may transmit a signal to a first device (for example, an ambient power (ambient power, AMP) device) to provide energy and/or power to the first device, so that the first device can communicate with the second device. However, the second device is usually located far from the first device, which requires a high transmit power for the second device. For some reasons (such as regulatory rules in different countries and regions), a maximum transmit power of the second device is restricted, which may cause a relatively long time required for the first device to harvest energy and/or power from signals transmitted by the second device at its maximum transmit power. In some cases, when the first device is far from the second device, the signals transmitted by the second device at the maximum transmit power may not reach the first device at all, greatly limiting a distance between the second device and the first device.

In some other scenarios, the second device may transmit a wake-up signal to the first device to wake the first device from a dormant state to communicate with the second device. However, the second device is usually located far from the first device, and the first device can receive the wake-up signal only if the second device has a high transmit power. However, due to some reasons (such as regulatory rules in different countries and regions), the maximum transmit power of the second device is limited, which severely limits a distance between the second device and the first device.

### SUMMARY

This application provides a wireless communication method and a communications device. Various aspects of this application are described below.

According to a first aspect, a wireless communication method is provided, and the method includes: transmitting, by an assisting node, a first signal to a first device, where the first signal is used for one or more of the following: providing, to the first device, energy and/or power for communication with the second device; or waking up the first device to communicate with the second device.

According to a second aspect, a wireless communication method is provided, and the method includes: receiving, by a first device, a first signal transmitted by an assisting node, where the first signal is used for one or more of the following: providing, to the first device, energy and/or power for communication with the second device; or waking up the first device to communicate with the second device.

According to a third aspect, a wireless communication method is provided, and the method includes: transmitting, by a second device, first indication information to an assisting node, where the first indication information is used to instruct the assisting node to transmit a first signal to a first device, and the first signal is used for one or more of the following: providing, to the first device, energy and/or power for communication with the second device; or waking up the first device to communicate with the second device.

According to a fourth aspect, a wireless communication method is provided, and the method includes: receiving, by a second device, fourth information transmitted by a first device, where the fourth information is used for the second device to select a first assisting node for the first device, and the first assisting node is used for one or more of the following: providing energy and/or power to the first device; or waking up the first device.

According to a fifth aspect, a wireless communication method is provided, and the method includes: transmitting, by a first device, fourth information to a second device, where the fourth information is used for the second device to select a first assisting node for the first device, and the first assisting node is used for one or more of the following: providing energy and/or power to the first device; or waking up the first device.

According to a sixth aspect, a wireless communication method is provided, and the method includes: transmitting, by a first assisting node, second indication information to a first device, where the second indication information is used to indicate the first assisting node, and/or the first assisting node being associated with a second device. The first assisting node is used to provide the energy and/or the power for the first device; and/or the first assisting node is used to wake up the first device.

According to a seventh aspect, a communications device is provided, where the communications device is an assisting node and includes: a transmitting unit, configured to transmit a first signal to a first device, where the first signal is used for one or more of the following: providing, to the first device, energy and/or power for communication with the second device; or waking up the first device to communicate with the second device.

According to an eighth aspect, a communications device is provided. The communications device is a first device, and includes: a receiving unit, configured to receive a first signal transmitted by an assisting node, where the first signal is used for one or more of the following: providing, to the first device, energy and/or power for communication with the second device; or waking up the first device to communicate with the second device.

According to a ninth aspect, a communications device is provided. The communications device is a second device, and includes: a transmitting unit, configured to transmit first indication information to an assisting node, where the first indication information is used to instruct the assisting node to transmit a first signal to a first device, and the first signal is used for one or more of the following: providing, to the first device, energy and/or power for communication with the second device; or waking up the first device to communicate with the second device.

According to a tenth aspect, a communications device is provided. The communications device is a second device, and includes: a receiving unit, configured to receive fourth information transmitted by a first device, where the fourth information is used for the second device to select a first assisting node for the first device, and the first assisting node is used for one or more of the following: providing energy and/or power to the first device; or waking up the first device.

According to an eleventh aspect, a communications device is provided. The communications device is a first device, and includes: a transmitting unit, configured to transmit fourth information to a second device, where the fourth information is used for the second device to select a first assisting node for the first device, and the first assisting node is used for one or more of the following: providing energy and/or power to the first device; or waking up the first device.

According to a twelfth aspect, a communications device is provided, where the communications device is a first assisting node and includes: a transmitting unit, configured to transmit second indication information to a first device, where the second indication information is used to indicate the first assisting node, and/or the first assisting node being associated with a second device, and the first assisting node is used for one or more of the following: providing energy and/or power to the first device; or waking up the first device.

According to a thirteenth aspect, a communications device is provided. The communications device includes a processor, a memory, and a communications interface. The memory is configured to store one or more computer programs, and the processor is configured to invoke the computer program in the memory, to cause the communications device to execute some or all of the steps in the methods according to the foregoing aspects.

According to a fourteenth aspect, an embodiment of this application provides a communications system, where the system includes the communications device described above. In another possible design, the system may further include another device that interacts with the terminal device or the network device in the solutions provided in embodiments of this application.

According to a fifteenth aspect, an embodiment of this application provides a computer-readable storage medium. The computer-readable storage medium stores a computer program, and the computer program causes a communications device to execute some or all of the steps in the method according to the foregoing aspects.

According to a sixteenth aspect, an embodiment of this application provides a computer program product. The computer program product includes a non-transitory computer-readable storage medium that stores a computer program. The computer program is operable to cause a communications device to execute some or all of the steps in the method according to the foregoing aspects. In some implementations, the computer program product may be a software installation package.

According to a seventeenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a first device may be controlled by an assisting node, for example, providing energy and/or power to the first device, or waking up the first device. Compared with a conventional solution, the first device is controlled by a second device, which helps reduce a requirement for a distance between the first device and the second device and improves flexibility of communication between the first device and the second device.

### BRIEF DESCRIPTION OF DRAWINGS

FIG. 1 shows a wireless communications system 100 to which embodiments of this application are applied.
FIG. 2 is another wireless communications system 200 to which embodiments of this application are applied.
FIG. 3 and FIG. 4 show communication architectures based on assisting nodes according to embodiments of this application.
FIG. 5 is a schematic flowchart of a wireless communication method according to an embodiment of this application.
FIG. 6 is a schematic diagram of a transmission manner of a wake-up signal and an energy supply signal according to an embodiment of this application.
FIG. 7 is a schematic flowchart of a method for wireless communication according to an embodiment of this application.
FIG. 8 to FIG. 13 are schematic diagrams of communications devices according to embodiments of this application.
FIG. 14 is a schematic diagram of a structure of a communications apparatus according to an embodiment of this application.

### DESCRIPTION OF EMBODIMENTS

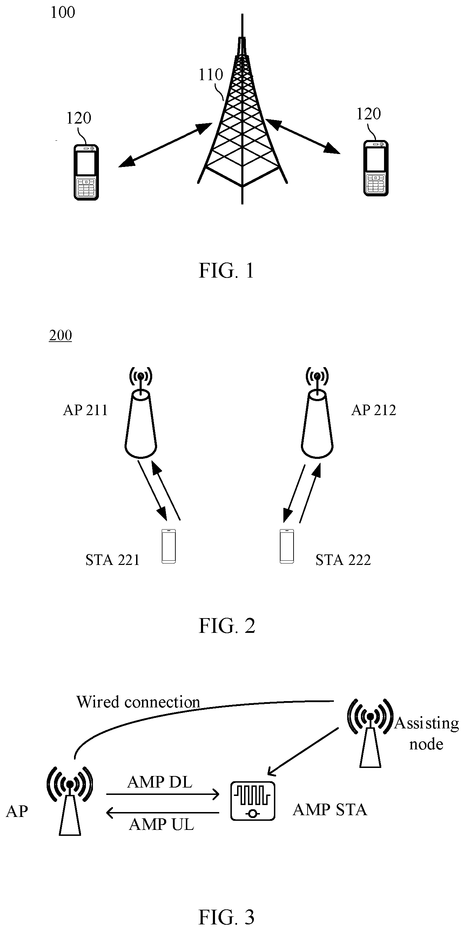

Technical solutions in this application are described below with reference to the accompanying drawings. FIG. 1 shows a wireless communications system 100 to which embodiments of this application are applied.

In some scenarios, the wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multistandard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

It should be understood that all or some of functions of the communications device in this application may alternatively be implemented by software functions running on hardware, or by virtualization functions instantiated on a platform (for example, a cloud platform).

In some other scenarios, the technical solutions in embodiments of this application may be applied to various communications systems, for example, a wireless local area network (wireless local area networks, WLAN), wireless fidelity (wireless fidelity, WiFi), a high performance radio local area network (high performance radio local area networks, HIPELAN), a wide area network (wide area networks, WAN), a cellular network, or another communications system. For another example, the technical solutions in the embodiments of this application may be applied to a communications system using the 802.11 standard. For example, the 802.11 standard includes but is not limited to the 802.11ax standard, the 802.11be standard, a subsequent next generation 802.11 standard, or the like.

FIG. 1 is a schematic diagram of a communications system to which an embodiment of this application is applied. Referring to FIG. 1, communications devices in communications system 100 may include an access point (access point, AP) 211, an AP 212, a station (station, STA) 221, and a STA 222, where the STA 221 may access a network via the AP 211, and the STA 222 may access a network via the AP 212.

In some implementations, an STA may establish an association relationship with one or more APs. Then, the STA and the AP(s) that have an association relationship may communicate with each other. With reference to FIG. 1, the AP 211 and the STA 221 may communicate with each other after an association relationship is established therebetween; and the AP 212 and the STA 222 may communicate with each other after an association relationship is established therebetween.

In some implementations, communication in the communications system 100 may be communication between an AP and a non-AP STA, or may be communication between one non-AP STA and another non-AP STA, or may be communication between an STA and a peer STA, where the peer STA may refer to a device that performs peer-to-peer communication with the STA, for example, the peer STA may be an AP, or may be a non-AP STA.

It should be understood that FIG. 2 exemplarily shows two AP STAs and two non-AP STAs. Alternatively, the communications system 200 may include more AP STAs, or the communications system 200 may include another quantity of non-AP STAs. This is not limited in embodiments of this application.

In addition, the communications system may be applied to scenarios of multi-device collaboration, for example, a scenario of multiple-AP (multiple access points, Multi-AP) collaboration, a scenario of multi-station collaboration, or the like.

Names the AP and/or STA are not limited in embodiments of this application. In some scenarios, an AP may also be referred to as an AP STA. In other words, in a sense, the AP is also an STA. In some other scenarios, an STA may also be referred to as a non-AP STA (non-AP STA).

In embodiments of this application, the AP may be a device in a wireless network. The AP may be a communications entity, for example, a communications server, a router, a switch, a network bridge, or the like; or the AP device may include various forms of macro base stations, micro base stations, relay stations, or the like. Certainly, the AP may alternatively be a chip, a circuit, or a processing system in these various forms of devices, to implement a method and a function in embodiments of this application. The AP device may be applied to a variety of scenarios, for example, a sensor node in a smart city (for example, a smart water meter, a smart electricity meter, or a smart air detection node), a smart device in a smart home (for example, a smart camera, a projector, a display screen, a TV, a speaker, a refrigerator, a washing machine, or the like), a node in the Internet of Things, an entertainment terminal (for example, a wearable device such as AR or VR), a smart device in a smart office (for example, a printer, a projector, or the like), a vehicle-to-everything device in the Internet of Vehicles, some infrastructure in daily life scenarios (for example, a vending machine, a self-service navigation station in a shopping mall or supermarket, a self-service cashier device, or a self-ordering kiosk), or the like.

In some implementations, a role of the STA in the communications system is not fixed. In some scenarios, the STA may serve as an AP. For example, in a scenario in which a mobile phone is connected to a route, the mobile phone may be a non-AP STA; in a case that the mobile phone serves as a hotspot for another mobile phone, the mobile phone acts as an AP.

In embodiments of this application, an STA device in embodiments of this application may be a device having a wireless transceiver function, for example, may be a device that supports protocols 802.11 series and may communicate with an AP or another STA. For example, the STA is any communications device of a user that allows the user to communicate with an AP and then communicate with WLAN. For example, the STA device is: a user equipment (user equipment, UE), a mobile station (mobile station, MS), a mobile terminal (mobile terminal, MT), an access terminal, a subscriber unit, a subscriber station, a mobile site, a mobile station, a remote station, a remote terminal, a mobile device, a user terminal, a terminal, a wireless communications device, a user agent, a user apparatus, or the like.

The STA in embodiments of this application may alternatively be a device providing a user with voice/data connectivity, for example, a handheld device, a vehicle-mounted device, or the like having a wireless connection function. For example, the STA is a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example rather than limitation, in embodiments of this application, the STA device may alternatively be a wearable device. The wearable device may also be referred to as a wearable intelligent device, and is a general term for wearable devices such as glasses, gloves, watches, clothes, and shoes that are intelligently designed and developed by applying wearable technologies to daily wearing. For example, the wearable device is a smart watch or smart glasses, or a device that focuses on only a specific type of application function and is required to cooperate with another device such as a smart phone for use, for example, various smart bracelets, smart jewelries, or the like for physical sign monitoring.

In addition, in embodiments of this application, the STA device may alternatively be a terminal device in an Internet of Things (internet of things, IoT) system. The IoT is an important component of future development of information technologies, and a main technical feature of the IoT is that objects are connected to a network by using a communication technology, to implement an intelligent network of human-computer interconnection and interconnection of things. In embodiments of this application, the IoT technology may implement mass connection, intensive coverage, and terminal power saving by using a narrow band (narrow band, NB) technology or the like.

In addition, in embodiments of this application, the STA device may be a device in a vehicle-to-everything system. Communication methods in the vehicle-to-everything system are collectively referred to as V2X (where X represents everything). For example, the V2X communication includes: vehicle to vehicle (vehicle to vehicle, V2V) communication, vehicle to roadside infrastructure (vehicle to infrastructure, V2I) communication, vehicle to pedestrian (vehicle to pedestrian, V2P) communication, vehicle to network (vehicle to network, V2N) communication, or the like.

In addition, in embodiments of this application, the STA device may further include sensors such as a smart printer, a train detector, a gas station, or the like. Main functions of the device include: data collection (some terminal devices), receiving of control information and downlink data of the AP device, transmitting of an electromagnetic wave, and transmission of data to the AP.

In addition, the AP device in embodiments of this application may be a device for communicating with the STA device. The AP device may be a network device in a wireless local area network. The AP device may be configured to communicate with the STA device through the wireless local area network.

From the perspective of a communication standard supported by an AP, in some implementations, the AP may be a device that supports the 802.11be standard. The AP may alternatively be a device that supports a plurality of existing and future WLAN standards of the 802.11 family, such as 802.11ax, 802.11ac, 802.11n, 802.11g, 802.11b, and 802.11a.

From the perspective of a communication standard supported by an STA, in some implementations, the non-AP STA may support the 802.11be standard. The non-AP STA may also support a plurality of current and future wireless local area network (wireless local area networks, WLAN) standards of an 802.11 family, such as 802.11ax, 802.11ac, 802.11n, 802.11g, 802.11b, and 802.11a.

Frequency bands supported in a WLAN technology are not limited in embodiments of this application. In some implementations, the frequency bands supported in the WLAN technology may include but are not limited to a low frequency band (for example, 2.4 GHz, 5 GHz, or 6 GHz) and a high frequency band (for example, 45 GHz or 60 GHz).

It should be understood that specific forms of the STA device and the AP device are not specially limited in embodiments of this application and are only described exemplarily herein.

### Ambient-energy-based device

In known wireless communications systems (for example, the NR system described above and a WiFi system), an ambient-energy-based device is similar to a passive zero-power device or a semi-passive zero-power device in zero-power communication. Energy required for operation of the devices typically comes from ambient energy harvesting, with ambient energy sources including wireless signals, solar energy, thermal energy, and the like. This type of device has advantages such as being low-cost and battery-free, which may support low-cost, large-scale, and maintenance-free deployment of devices such as IoT devices. Therefore, in current standards, research is being conducted on how to support this type of device in existing wireless communications systems.

In embodiments of this application, the ambient-energy-based device may be referred to as an AMP device, an ambient IoT (ambient IoT), an AMP IoT device, or the like.

### Assisting node (assisting node)

In some scenarios, a second device may transmit a signal to a first device (for example, an AMP device) to provide energy and/or power to the first device, so that the first device can communicate with the second device. However, the second device is usually located far from the first device, which requires a high transmit power for the second device. For some reasons (such as regulatory rules in different countries and regions), a maximum transmit power of the second device is restricted, which may cause a relatively long time required for the first device to harvest energy and/or power from signals transmitted by the second device at its maximum transmit power. In some cases, when the first device is far from the second device, the signals transmitted by the second device at the maximum transmit power may not reach the first device at all, greatly limiting a distance between the second device and the first device.

In some other scenarios, the second device may transmit a wake-up signal to the first device (for example, an AMP device) to wake the first device from a dormant state to communicate with the second device. However, the second device is usually located far from the first device, and the first device can receive the wake-up signal only if the second device has a high transmit power. However, due to some reasons (such as regulatory rules in different countries and regions), the maximum transmit power of the second device is limited, which severely limits a distance between the second device and the first device.

In view of the foregoing problem, an assisting node is introduced to assist in a communication process between the first device and the second device. However, how the assisting node assists in the communication process between the first device and the second device has not been discussed in detail. Therefore, an embodiment of this application provides a wireless communication method. According to the method, an assisting node may control a first device, for example, provide energy and/or power to the first device, or wake up the first device. Compared with a conventional solution, the first device is controlled by a second device, which helps reduce a requirement for a distance between the first device and the second device and improves flexibility of communication between the first device and the second device.

In some implementations, the second device may include a network device, for example, the network device 110 shown in FIG. 1. In some other implementations, the second device may be an AP, for example, the AP 211 shown in FIG. 2.

In some implementations, the first device may be a device that needs to be provided with energy and/or power, or the first device may be a device that needs to be awakened. For example, the first device may be an AMP device. In embodiments of this application, the first device may be a terminal device, for example, the terminal device 120 shown in FIG. 1. Certainly, in embodiments of this application, the first device may be an STA, for example, the STA 221 shown in FIG. 2.

In some implementations, the assisting node is also referred to as an "AMP enabler". For example, the assisting node may provide energy and/or power to the first device. For another example, the assisting node may wake up the first device.

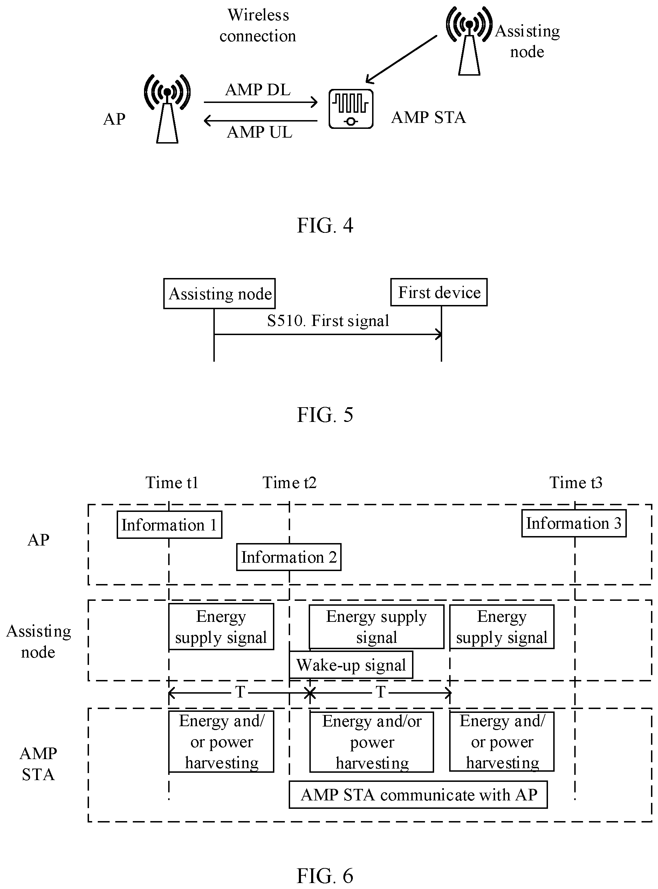

For ease of understanding, the communication architectures based on the assisting node proposed in embodiments of this application is first introduced below with reference to FIG. 3 and FIG. 4. As shown in FIG. 3, an assisting node may be connected to a second device via a wired connection. In some implementations, control signaling between the second device and the assisting node may be transmitted via higher-layer signaling. For example, the control signaling may be transmitted via higher-layer signaling.

In some implementations, information transmitted by the second device to the first device may be referred to as downlink information. In an example in which the second device is an AP and the first device is an AMP STA, the information transmitted by the second device to the first device may be referred to as AMP DL.

In some implementations, information transmitted by the first device to the second device may be referred to as uplink information. In an example in which the second device is an AP and the first device is an AMP STA, the information transmitted by the first device to the second device may be referred to as AMP UL.

In some implementations, the assisting node and the second device may be considered as a single logical entity, where the assisting node may be considered as a radio head of the second device, and may be used to provide energy and/or power to the first device.

As shown in FIG. 4, an assisting node may be connected to a second device via a wireless connection. In some implementations, control signaling between the second device and the assisting node may be transmitted via a wireless link.

In some implementations, information transmitted by the second device to the assisting device may be referred to as downlink information. In an example in which the second device is an AP, the information transmitted by the second device to the assisting device may be referred to as assisting node DL.

In some implementations, information transmitted by the assisting device to the second device may be referred to as uplink information. In an example in which the second device is an AP, the information transmitted by the assisting device to the second device may be referred to as assisting node UL.

In some implementations, information transmitted by the second device to the first device may be referred to as downlink information. In an example in which the second device is an AP and the first device is an AMP STA, the information transmitted by the second device to the first device may be referred to as AMP DL.

In some implementations, information transmitted by the first device to the second device may be referred to as uplink information. In an example in which the second device is an AP and the first device is an AMP STA, the information transmitted by the first device to the second device may be referred to as AMP UL.

In some implementations, it is assumed that a communication protocol for communication between the assisting node and the second device is called a first communication protocol, and a communication protocol for communication between the assisting node and the second device is called a second communication protocol, where the first communication protocol and the second communication protocol may be different from each other. For example, the first communication protocol may be a WiFi communication protocol, and the second communication protocol may be a Bluetooth communication protocol. For another example, the second communication protocol may be a WiFi communication protocol, and the first communication protocol may be a Bluetooth communication protocol. Certainly, in embodiments of this application, the first communication protocol and the second communication protocol may be the same communication protocol. For example, both the first communication protocol and the second communication protocol are WiFi communication protocols. For another example, both the first communication protocol and the second communication protocol are Bluetooth communication protocols.

In some implementations, the assisting node and the second device may be considered as independent logical entities, or the assisting node is logically separated from the second device. In an example of a WiFi system, if the second device is an AP, the assisting node may be a non-AP STA associated with the AP.

The wireless communication method in embodiments of this application is described below with reference to FIG. 5. The method illustrated in FIG. 5 includes step S510.

In step S510, an assisting node transmits a first signal to a first device.

In some implementations, the first signal is used for one or more of the following: providing, to the first device, energy and/or power for communication with the second device; or waking up the first device to communicate with the second device.

In some scenarios, if the first signal is used to provide, to the first device, energy and/or power for communication with the second device, the first signal may also be referred to as an "energy supply signal" or a "power transmission signal." In this case, the assisting node may be regarded as an energy source for the first device.

In some other scenarios, if the first signal is used to wake up the first device to communicate with the second device, the first signal may also be referred to as a "wake-up signal".

In embodiments of this application, the energy supply signal and the wake-up signal are not limited. For example, the energy supply signal and the wake-up signal may be a same signal, or the first signal may be used to wake up the first device and provide energy and/or power to the first device. For another example, the energy supply signal and the wake-up signal may be different signals.

The first signal in embodiments of this application is described above, and the transmission manners of the first signal in embodiments of this application are described below with reference to Examples 1 to 4.

**Example 1**: The first signal may be triggered based on a first event, or transmission of the first signal may be triggered based on occurrence of a first event.

In some implementations, the first event is associated with one or more of the following: the second device has data to be transmitted to the first device; or the second device instructs the assisting node to wake up the first device.

For example, the first event is associated with that the second device has data to be transmitted to the first device. In some implementations, the first event may include that the second device has data to be transmitted to the first device, or the first event may include that the second device has data to be transmitted to the first device and an amount of data to be transmitted exceeds a threshold, where the threshold may be predefined, pre-configured, or configured by a network device.

In embodiments of this application, triggering the first signal based on the first event associated with that the second device has data to be transmitted to the first device may be understood as triggering the first information based on a requirement for the second device to transmit data, that is, when there is data to be transmitted, the assisting node transmits the first signal to the first device, which helps reduce power consumption of the first device.

For example, the first event is associated with that the second device instructs the assisting node to wake up the first device, that is, in response to that the assisting node receives information, from the second device, instructing to wake up the first device, the assisting node may transmit a wake-up signal to the first device.

In embodiments of this application, the first signal triggered based on the first event is not limited. For example, the first signal may be used to wake up the first device while providing energy and/or power to the first device. Certainly, in embodiments of this application, the first signal may only be used to wake up the first device, or the first signal may only be used to provide energy and/or power to the first device.

It is assumed that both the wake-up signal and the energy supply signal are the first signal, the second device is an AP, the first device is a STA, and the first event includes that the second device has data to be transmitted to the first device. When the AP has downlink data to be transmitted, the AP may instruct the assisting node to transmit the first signal to the STA, to wake up the first device while providing energy and/or power to the first device.

**Example 2:** The first signal may be periodically transmitted.

In some implementations, a period for transmitting the first signal may be configured by the second device. Certainly, in embodiments of this application, the period for transmitting the first signal may be predefined or pre-configured.

It is assumed that both a wake-up signal and an energy supply signal are the first signal, the second device is an AP, and the first device is a STA. In this case, a period configured by the AP for the assisting node to transmit the first signal is a period 1. Accordingly, the assisting node periodically transmits the first signal to the STA with the period 1, to wake up the STA while providing energy and/or power to the STA.

In embodiments of this application, the first signal transmitted based on a period is not limited. For example, the first signal may be used to wake up the first device while providing energy and/or power to the first device. Certainly, in embodiments of this application, the first signal may only be used to wake up the first device, or the first signal may only be used to provide energy and/or power to the first device.

**Example 3**: If the first signal is used to wake up the first device to communicate with the second device, the step S510 includes: in a case that the assisting node continuously provides energy and/or power to the first device, in response to occurrence of the first event, transmitting, by the assisting node, the first signal to the first device.

That is to say, the wake-up signal and the energy supply signal are different signals. The assisting node may continuously transmit the energy supply signal to the first device to provide energy and/or power to the first device. In addition, when the first event occurs, the assisting node may transmit the wake-up signal to the first device to wake up the first device.

It should be noted that, for the first event, reference may be made to the related description in Example 2. For example, the first event includes that the second device has data to be transmitted to the first device. The assisting node may always be in an on state and continuously transmit power transmission signals to the first device for the first device to perform energy harvesting. Once the second device has data to be transmitted to the first device (that is, the first event occurs), the second device may transmit indication information to the assisting node via higher-layer signaling to instruct the assisting node to wake up the first device.

In embodiments of this application, the assisting node may continuously provide energy and/or power to the first device and only notify the assisting node to wake up the first device when the second device has a communication need. The assisting node continuously provides energy and/or power to the first device, which helps shorten time for the first device to harvest energy. In addition, the assisting node only wakes up the first device when the second device has a communication need, which helps reduce power consumption of the first device.

**Example 4:** If the first signal is used to provide energy and/or power to the first device for communication with the second device, the method further includes: receiving, by the assisting node, first information transmitted by the second device, where the first information is used to instruct to activate the assisting node to provide energy and/or the power to the first device.

In some implementations, the first information may be transmitted periodically. That is to say, the second device may periodically activate the assisting node via the first information to provide energy and/or power to the first device. Certainly, in embodiments of this application, the first information may be transmitted aperiodically. For example, the second device may transmit the first information to the assisting node based on the data to be transmitted.

In some implementations, the method further includes: transmitting, by the second device, second information to the assisting node, where the second information is used to instruct the assisting node to wake up the first device.

In some implementations, a transmitting time of the first information and a transmitting time of the second information may be constrained based on a first constraint condition. For example, the first constraint condition may include that the transmitting time of the first information is earlier than the transmitting time of the second information, so that the first device may perform energy and/or power harvesting before being woken up. For another example, the first constraint condition may include that the transmitting time of the first information is earlier than the transmitting time of the second information, and an interval between the transmitting time of the first information and the transmitting time of the second information is a first time interval. The introduction of the first time interval helps the first device harvest a specific amount of energy and/or power to support subsequent communication processes.

In embodiments of this application, a configuration of the first time interval is not limited. In some implementations, the first time interval may be determined based on a parameter (for example, denoted as "Tch"). For example, the parameter Tch may indicate a minimum time interval corresponding to the first time interval. For another example, the parameter Tch may be duration of the first time interval. The parameter may be predefined or pre-configured.

In some implementations, the first time interval is associated with a device type of the first device, or in other words, setting of the first time interval may be related to a capability of the first device. For example, for a first device with relatively high energy and/or power harvesting efficiency, the duration of the first time interval may be relatively short, helping to wake up the first device more quickly. For another example, for a first device with relatively low energy and/or power harvesting efficiency, the duration of the first time interval may be relatively long, helping the first device harvest a specific amount of energy and/or power to communicate with the second device after the first device is woken up.

In embodiments of this application, the device type of the first device and the duration of the first time interval may be determined based on an association relationship. This association relationship may be pre-configured or predefined.

It should be noted that after receiving the first information, the assisting node usually transmits an energy supply signal to the first device. Additionally, after receiving the second information, the assisting node usually transmits a wake-up signal to the first device. Therefore, the first time interval may be understood as a time interval between a transmitting time of the wake-up signal and a transmitting time of the energy supply signal. Certainly, in embodiments of this application, it may also be understood that the time interval between the transmitting time of the wake-up signal and the transmitting time of the energy supply signal is determined based on the first time interval.

Based on the above description, Example 3 and/or Example 4 may be applied to scenarios where the wake-up signal and the energy supply signal are different signals. In some implementations, if the wake-up signal and the energy supply signal are different signals, an end time of the energy supply signal may be determined based on an end time of communication between the first device and the second device. For example, the end time of the energy supply signal may be later than or equal to the end time of communication between the first device and the second device. That is to say, the assisting node may continuously provide energy and/or power to the first device until communication between the first device and the second device ends.

In some scenarios, the second device may control the assisting node to provide energy and/or power to the first device. That is to say, the second device may activate the assisting node to supply energy and/or power to the first device until communication between the second device and the first device concludes. The second device may then control the assisting node to stop providing energy and/or power to the first device, for example, the second device may deactivate the assisting node.

For ease of understanding, a transmission manner of the wake-up signal and the energy supply signal in embodiments of this application is described below with reference to FIG. 6. It is assumed that the second device is an AP and the first device is an AMP STA. Referring to FIG. 6, at time t1, the AP transmits information 1 to an assisting node to activate the assisting node to provide energy and/or power to the first device. In response to the information 1, the assisting node transmits an energy supply signal to the AMP STA to provide energy and/or power to the first device. Accordingly, the AMP STA performs energy and/or power harvesting at time 1.

At time t2, the AP transmits information 2 to the assisting node to instruct the assisting node to transmit a wake-up signal to the first device. In response to the information 2, the assisting node transmits the wake-up signal to the AMP STA to wake up the AMP STA. Accordingly, the AMP STA is activated at time 2 to communicate with the AP. There is a first time interval between time t1 and time t2, so that the AMP STA may harvest a specific amount of energy. Additionally, the assisting node may transmit the energy supply signal to the AMP STA with a period T, to provide energy and/or power to the AMP STA.

At time 3, the AP transmits information 3 to the assisting node to instruct the assisting node to stop providing energy and/or power to the AMP STA. In other words, the information 3 is used to instruct to deactivate the assisting node.

In some scenarios, the second device may fail to distinguish between the first device and the assisting node. For example, a communication protocol used between the assisting node and the second device may be the same as a communication protocol used between the first device and the second device (refer to the architecture shown in FIG. 4). In this case, the second device may possibly transmit, to the first device, information for instructing to activate the assisting node, causing communication failure.

Therefore, in view of the problem, an embodiment of this application provides a method for distinguishing between an assisting node and a first device. In this method, the assisting node may transmit third information to a second device to indicate a node type of the assisting node. Accordingly, the second device may determine, based on the node type, whether a transmit end of the third information is the assisting node or the first device.

It should be understood that the node type may also be replaced with "operation type". That is to say, the assisting node may transmit the third information to the second device to indicate that an operation type of the assisting node is an assisting node.

In some scenarios, because the assisting node and the first device may be relatively close to each other, communication between the second device and the assisting node may interfere with communication between the second device and the first device. Therefore, in view of the problem, the two communications may be performed in a time-division multiplexing or frequency-division multiplexing manner.

That is to say, communication between the assisting node and the first device is based on a first transmission resource, and communication between the assisting node and the second device is based on a second transmission resource, where the first transmission resource and the second transmission resource do not overlap in time domain; or the first transmission resource and the second transmission resource do not overlap in frequency domain. Certainly, in embodiments of this application, the first transmission resource and the second transmission resource may not overlap in time domain or frequency domain.

In some implementations, the first transmission resource and the second transmission resource may be configured by the second device. That is to say, the second device may coordinate communication between the second device and the assisting node, and communication between the second device and the first device in a TDM or FDM manner.

In embodiments of this application, at least one of the first transmission resource or the second transmission resource is not limited. For example, a transmission resource may be a resource element (resource element, RE). For another example, a transmission resource may be a resource block (resource block, RB).

In some implementations, a transmission opportunity associated with the assisting node is shared by the second device. For example, the second device may be an AP, and the first device may be an AMP STA. In this case, the AP can complete channel access. Then the AP may share, by using a shared transmission opportunity (transmission opportunity, Txop) mechanism, the Txop with the assisting node for a period of time, so that the assisting node may transmit a wake-up signal to the AMP STA. Next, the AP may end sharing the Txop and communicate with the AMP STA using the Txop.

Certainly, in embodiments of this application, the assisting node may perform channel access, or the assisting node may perform channel access with an assistance of the AP. In this way, the communication between the assisting node and the first device is independent of the communication between the second device and the first device.

In some scenarios, a plurality of assisting nodes may be deployed around one first device, and all the plurality of assisting nodes may provide energy and/or power to the first device. For some reasons, different assisting nodes among the plurality of assisting nodes may have different efficiencies in providing energy and/or power to the first device. For example, different assisting nodes have different capabilities, resulting in that different assisting nodes have different efficiencies in providing energy and/or power to the first device. For another example, different assisting nodes have different distances from the first device, resulting in that different assisting nodes have different efficiencies in providing energy and/or power to the first device. However, the second device usually cannot learn the efficiency of different assisting nodes in providing energy and/or power to the first device, resulting in that the second device cannot select a suitable assisting node for the first device.

Therefore, in view of the problem, an embodiment of this application provides a wireless communication method. In this method, since a first device may learn efficiency of different assisting nodes in providing energy and/or power to the first device, the first device may assist a second device in selecting an assisting node associated with the first device (also referred to as a "first assisting node"), which helps improve properness of selecting an assisting node for the first device.

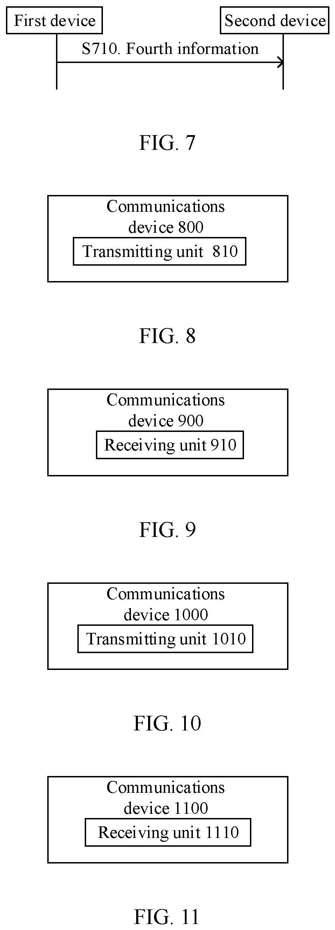

The wireless communication method in embodiments of this application is described below with reference to FIG. 7. Referring to FIG. 7, in step S710, a first device transmits fourth information to a second device. The fourth information is used by the second device to select a first assisting node for the first device. For the first assisting node, reference may be made to the description of the assisting node described above.

In some implementations, the fourth information is used to indicate one or more of the following: the first assisting node; the second device associated with the first assisting node; or a distance between the first device and the first assisting node.

In some implementations, the fourth information may indicate the first assisting node by carrying identity information of the first assisting node.

In some implementations, the fourth information may indicate the second device associated with the first assisting node by carrying identity information of the second device associated with the first assisting node, so that the second device can determine that the second device associated with the first assisting node is the second device itself. In some scenarios, different assisting nodes may be associated with different second devices. In this case, the second device associated with the first assisting device may be determined based on information about the second device associated with the first assisting node.

In some implementations, the fourth information may include a distance between the first device and the first assisting node. In this way, the second device may select, based on the information, a suitable assisting node as the first assisting node for the first device.

In embodiments of this application, a method for determining the distance between the first device and the first assisting node is not limited. In some implementations, a distance between the first device and the first assisting node may be determined based on a location of the first device. For example, the first device may transmit location information of the first device to the second device. Accordingly, the second device may determine, based on the location information of the first device and location information of the first assisting node, the distance between the first device and the first assisting node. Certainly, in embodiments of this application, the second device may determine a location of the first device by using a positioning method. The positioning methods may include GNSS positioning, base station positioning, WiFi positioning, or the like.

Additionally, in embodiments of this application, a method for obtaining the location of the first assisting node is not limited. In some implementations, the location information of the first assisting node may be reported by the first assisting node to the second device, or the second device may determine a location of the first assisting node based on a positioning method. For the positioning method, reference may be made to for the foregoing description.

In some implementations, before step S710, the method further includes: transmitting, by the second device, fifth information to the first assisting node.

In some implementations, the fifth information includes one or more of the following: an identity of the first device; an identity of the first assisting node; or an identity of the second device associated with the first assisting node.

In some implementations, the identity of the first device may be used to indicate a first device for which the first assisting node is to provide energy and/or power, and/or the identity of the first device may be used to indicate a first device that the first assisting node needs to wake up.

In some implementations, the second device may indicate, to the first assisting node by using the fifth information, the identity of the first assisting node and/or the identity of the second device associated with the first assisting node, so that the first assisting node may transmit the information to the first device. Then the first device may transmit the fourth information based on the information.

In embodiments of this application, the fifth information is not limited. For example, the fifth information is used to instruct to provide energy and/or power to the first device, and/or the fifth indication information is used to instruct to wake up the first device.

In some implementations, the method further includes: transmitting, by the first assisting node, second indication information to the first device, where the second indication information is used to indicate the first assisting node, and/or the first assisting node being associated with a second device.

In some implementations, if the second indication information is used to indicate the first assisting node, the second indication information may carry identity information of the first assisting node. The identity information of the first assisting node may be indicated by the second device via the fourth information.

In some implementations, if the second indication information is used to indicate the first assisting node being associated with the second device, or in other words, the second indication information is used to indicate the second device associated with the first assisting node, then for example, the second indication information may carry the identity information of the second device associated with the first assisting node. The identity information of the second device associated with the first assisting node may be transmitted by the second device to the first assisting node via the fourth information.

In some implementations, the method further includes: in response to the fourth information, establishing, by the second device, an association relationship between the first device and the first assisting node, to simplify a subsequent process of selecting the first assisting node for the first device. The association relationship may be presented, for example, in a form of a table.

In some scenarios, the first device is a mobile device. When the first device moves out of coverage of the first assisting node, the second device may update the association relationship.

In some implementations, the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes. Generally, a greater distance between the assisting node and the first device indicates lower efficiency of the assisting node in providing energy and/or power to the first device. Therefore, an assisting node closer to the first device may be selected as the first assisting node to improve the efficiency of the first assisting node in providing energy and/or power to the first device.

In some implementations, if the first assisting node is one of a plurality of assisting nodes associated with the second device, the method further includes: transmitting, by the second device, sixth information to the another assisting node, where the sixth information is used to instruct to deactivate the other assisting node, and the other assisting node is another node, other than the first assisting node, in the plurality of assisting nodes. The second device may deactivate the other assisting node through the sixth information to reduce power consumption of the assisting node. In addition, the second device may deactivate the other assisting node through the sixth information to avoid interference caused by transmission of a signal providing energy and/or power from the other assisting node with signal transmission of the first assisting node.

The method embodiments of this application are described above in detail with reference to FIG. 1 to FIG. 7. Apparatus embodiments of this application are described below in detail with reference to FIG. 8 to FIG. 14. It should be understood that the descriptions of the method embodiments correspond to descriptions of the apparatus embodiments, and therefore, for parts that are not described in detail, reference may be made to the foregoing method embodiments.

FIG. 8 is a schematic diagram of a communications device according to an embodiment of this application. The communications device 800 shown in FIG. 8 is an assisting node, and the communications device 800 includes a transmitting unit 810.

The transmitting unit 810 is configured to transmit a first signal to a first device, where the first signal is used for one or more of the following: providing, to the first device, energy and/or power for communication with the second device; or waking up the first device to communicate with the second device.

In some implementations, the first signal is triggered based on a first event, and the first event is associated with one or more of the following: the second device has data to be transmitted to the first device; or the second device instructs the assisting node to wake up the first device.

In some implementations, if the first signal is used to wake up the first device to communicate with the second device, the transmitting unit is configured to: in a case that the assisting node continuously provides energy and/or power to the first device, in response to occurrence of the first event, transmit the first signal to the first device.

In some implementations, the first signal is periodically transmitted.

In some implementations, a transmission period of the first signal is configured by the second device.

In some implementations, in a case that the first signal is used to provide, to the first device, energy and/or power for communication with the second device, the communications device further includes: a first receiving unit, configured to receive first information transmitted by the second device, where the first information is used to instruct the assisting node to provide the energy and/or the power to the first device.

In some implementations, the first receiving unit is configured to receive second information transmitted by the second device, where the second information is used to instruct the assisting node to wake up the first device.

In some implementations, a transmitting time of the first information is earlier than a transmitting time of the second information, and an interval between the transmitting time of the first information and the transmitting time of the second information is a first time interval.

In some implementations, the first time interval is pre-configured based on a device type of the first device.

In some implementations, the transmitting unit is configured to: transmit third information to the second device, where the third information is used to indicate a node type of the assisting node.

In some implementations, communication between the assisting node and the first device is based on a first transmission resource, and communication between the assisting node and the second device is based on a second transmission resource, where the first transmission resource and the second transmission resource do not overlap in time domain; and/or the first transmission resource and the second transmission resource do not overlap in frequency domain.

In some implementations, the first transmission resource and the second transmission resource may be configured by the second device.

In some implementations, a transmission opportunity associated with the assisting node is shared by the second device, or the assisting node performs channel access.

In some implementations, a communication protocol used between the assisting node and the first device is the same as a communication protocol used between the assisting node and the second device.

In some implementations, an end time for provision of the energy and/or the power by the assisting node to the first device is determined based on an end time for communication between the first device and the second device.

FIG. 9 is a schematic diagram of a communications device according to an embodiment of this application. The communications device 900 shown in FIG. 9 is a first device and the communications device 900 includes a receiving unit 910.

The receiving unit 910 is configured to receive a first signal transmitted by an assisting node, where the first signal is used for one or more of the following: providing, to the first device, energy and/or power for communication with the second device; or waking up the first device to communicate with the second device.

In some implementations, the first signal is triggered based on a first event, and the first event is associated with one or more of the following: the second device has data to be transmitted to the first device; or the second device instructs the assisting node to wake up the first device.

In some implementations, if the first signal is used to wake up the first device to communicate with the second device, the receiving unit is configured to: in a case that the assisting node continuously provides energy and/or power to the first device, in response to occurrence of the first event, receive the first signal transmitted by the assisting node.

In some implementations, the first signal is periodically transmitted.

In some implementations, a transmission period of the first signal is configured by the second device.

In some implementations, communication between the assisting node and the first device is based on a first transmission resource, and communication between the assisting node and the second device is based on a second transmission resource, where the first transmission resource and the second transmission resource do not overlap in time domain; and/or the first transmission resource and the second transmission resource do not overlap in frequency domain.

In some implementations, the first transmission resource and the second transmission resource may be configured by the second device.

In some implementations, a transmission opportunity associated with the assisting node is shared by the second device, or the assisting node performs channel access.

In some implementations, a communication protocol used between the assisting node and the first device is the same as a communication protocol used between the assisting node and the second device.

In some implementations, an end time for provision of the energy and/or the power by the assisting node to the first device is determined based on an end time for communication between the first device and the second device.

FIG. 10 is a schematic diagram of a communications device according to an embodiment of this application. The communications device 1000 shown in FIG. 10 is a second device, and the communications device 1000 includes a transmitting unit 1010.

The transmitting unit 1010 is configured to transmit first indication information to an assisting node, where the first indication information is used to instruct the assisting node to transmit a first signal to a first device, and the first signal is used for one or more of the following: providing, to the first device, energy and/or power for communication with the second device; or waking up the first device to communicate with the second device.

In some implementations, the first signal is triggered based on a first event, and the first event is associated with one or more of the following: the second device has data to be transmitted to the first device; or the second device instructs the assisting node to wake up the first device.

In some implementations, the first signal is periodically transmitted.

In some implementations, a transmission period of the first signal is configured by the second device.

In some implementations, in a case that the first signal is used to provide, to the first device, energy and/or power for communication with the second device, the first indication information carries first information, and the first information is used to instruct to activate the assisting node to provide the energy and/or the power for the first device.

In some implementations, the transmitting unit is configured to transmit second information to the assisting node, where the second information is used to instruct the assisting node to wake up the first device.

In some implementations, a transmitting time of the first information is earlier than a transmitting time of the second information, and an interval between the transmitting time of the first information and the transmitting time of the second information is a first time interval.

In some implementations, the first time interval is pre-configured based on a device type of the first device.

In some implementations, the communications device further includes: a first receiving unit, configured to receive third information transmitted by the assisting node, where the third information is used to indicate a node type of the assisting node.

In some implementations, communication between the assisting node and the first device is based on a first transmission resource, and communication between the assisting node and the second device is based on a second transmission resource, where the first transmission resource and the second transmission resource do not overlap in time domain; and/or the first transmission resource and the second transmission resource do not overlap in frequency domain.

In some implementations, the first transmission resource and the second transmission resource may be configured by the second device.

In some implementations, a transmission opportunity associated with the assisting node is shared by the second device, or the assisting node performs channel access.

In some implementations, a communication protocol used between the assisting node and the first device is the same as a communication protocol used between the assisting node and the second device.

In some implementations, an end time for provision of the energy and/or the power by the assisting node to the first device is determined based on an end time for communication between the first device and the second device.

FIG. 11 is a schematic diagram of a communications device according to an embodiment of this application. The communications device 1100 shown in FIG. 11 is a second device and the communications device 1100 includes a receiving unit 1110.

The receiving unit 1110 is configured to receive fourth information transmitted by a first device, where the fourth information is used for the second device to select a first assisting node for the first device, and the first assisting node is used for one or more of the following: providing energy and/or power to the first device; or waking up the first device.

In some implementations, the fourth information is used to indicate one or more of the following: the first assisting node; the second device associated with the first assisting node; or a distance between the first device and the first assisting node.

In some implementations, the fourth information is used to indicate that the first assisting node includes the fourth information carrying an identity of the first assisting node to indicate the first assisting node.

In some implementations, before the second device receives the fourth information transmitted by the first device, the communications device further includes: a first transmitting unit, configured to transmit fifth information to the first assisting node, where the fifth information includes one or more of the following: an identity of the first device; an identity of the first assisting node; or an identity of the second device associated with the first assisting node.

In some implementations, the fifth information is used to instruct to provide energy and/or power to the first device, and/or the fifth information is used to instruct to wake up the first device.

In some implementations, the communications device further includes: a processing unit, configured to: in response to the fourth information, establish an association relationship between the first device and the first assisting node.

In some implementations, the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

In some implementations, the first assisting node is one of a plurality of assisting nodes associated with the second device, and the communications device further includes: a second transmitting unit, configured to transmit sixth information to the another assisting node, where the sixth information is used to instruct to deactivate the other assisting node, and the other assisting node is another node, other than the first assisting node, in the plurality of assisting nodes.

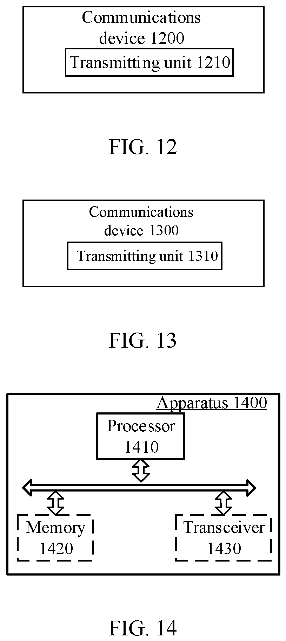

FIG. 12 is a schematic diagram of a communications device according to an embodiment of this application. The communications device 1200 shown in FIG. 12 is a first device and the communications device 1200 includes a transmitting unit 1210.

The transmitting unit 1210 is configured to transmit fourth information to a second device, where the fourth information is used for the second device to select a first assisting node for the first device, and the first assisting node is used for one or more of the following: providing energy and/or power to the first device; or waking up the first device.

In some implementations, the fourth information is used to indicate one or more of the following: the first assisting node; the second device associated with the first assisting node; or a distance between the first device and the first assisting node.

In some implementations, the fourth information is used to indicate that the first assisting node includes the fourth information carrying an identity of the first assisting node to indicate the first assisting node. The identity of the first assisting node is allocated by the second device.

In some implementations, the communications device further includes: a first receiving unit, configured to receive second indication information transmitted by the first assisting node, where the second indication information is used to indicate the first assisting node, and/or the first assisting node is associated with the second device.

In some implementations, the second indication information is used to indicate that the first assisting node includes the second indication information carrying an identity of the first assisting node to indicate the first assisting node.

In some implementations, the second indication information is carried in a first signal, and the first signal is used to provide, to the first device, energy and/or power for communication with the second device; and/or to wake up the first device to communicate with the second device.

In some implementations, the fourth information is used to establish an association relationship between the first device and the first assisting node.

In some implementations, the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

FIG. 13 is a schematic diagram of a communications device according to an embodiment of this application. The communications device 1300 shown in FIG. 13 is a first assisting node and the communications device 1300 includes a transmitting unit 1310.

The transmitting unit 1310 is configured to transmit second indication information to a first device, where the second indication information is used to indicate the first assisting node, and/or the first assisting node being associated with a second device, and the first assisting node is used for one or more of the following: providing energy and/or power to the first device; and/or waking up the first device.

In some implementations, the second indication information is carried in a first signal, and the first signal is used to provide, to the first device, energy and/or power for communication with the second device; and/or to wake up the first device to communicate with the second device.

In some implementations, the second indication information is used to indicate that the first assisting node includes the second indication information carrying an identity of the first assisting node to indicate the first assisting node.

In some implementations, the communications device further includes: a receiving unit, configured to receive fifth information transmitted by the second device. The fifth information includes one or more of the following: an identity of the first device; an identity of the first assisting node; or an identity of the second device associated with the first assisting node.

In some implementations, the fifth information is used to instruct to provide energy and/or power to the first device, and/or the fifth information is used to instruct to wake up the first device.

In some implementations, the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

FIG. 14 is a schematic diagram of a structure of a communications apparatus according to an embodiment of this application. Dashed lines in FIG. 14 indicate that a unit or module is optional. The apparatus 1400 may be configured to implement the methods described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program that may be executed by the processor 1410 to cause the processor 1410 to perform the methods described in the foregoing method embodiments. The memory 1420 may be separated from or integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by an assisting node, a first signal to a first device, wherein the first signal is used for one or more of following:
providing, to the first device, energy and/or power for communication with a second device; or
waking up the first device to communicate with the second device.

2. The method according to claim 1, wherein the first signal is triggered based on a first event, and the first event is associated with one or more of following:
the second device has data to be transmitted to the first device; or
the second device instructs the assisting node to wake up the first device.

3. The method according to claim 2, wherein in a case that the first signal is used to wake up the first device to communicate with the second device, the transmitting, by the assisting node, the first signal to the first device comprises:
in a case that the assisting node continuously provides energy and/or power to the first device, in response to occurrence of the first event, transmitting, by the assisting node, the first signal to the first device.

4. The method according to claim 1, wherein the first signal is periodically transmitted.

5. The method according to claim 4, wherein a transmission period of the first signal is configured by the second device.

6. The method according to claim 1, wherein in a case that the first signal is used to provide, to the first device, energy and/or power for communication with the second device, the method further comprises:
receiving, by the assisting node, first information transmitted by the second device, wherein the first information is used to instruct the assisting node to provide the energy and/or the power to the first device.

7. The method according to claim 6, wherein the method further comprises:
receiving, by the assisting node, second information transmitted by the second device, wherein the second information is used to instruct the assisting node to wake up the first device.

8. The method according to claim 7, wherein a transmitting time of the first information is earlier than a transmitting time of the second information, and an interval between the transmitting time of the first information and the transmitting time of the second information is a first time interval.

9. The method according to claim 8, wherein the first time interval is pre-configured based on a device type of the first device.

10. The method according to any one of claims 1 to 9, wherein the method further comprises:
transmitting, by the assisting node, third information to the second device, wherein the third information is used to indicate a node type of the assisting node.

11. The method according to any one of claims 1 to 10, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

12. The method according to claim 11, wherein the first transmission resource and the second transmission resource are configured by the second device.

13. The method according to any one of claims 1 to 10, wherein a transmission opportunity associated with the assisting node is shared by the second device, or
the assisting node performs channel access.

14. The method according to any one of claims 9 to 13, wherein a communication protocol used between the assisting node and the first device is the same as a communication protocol used between the assisting node and the second device.

15. The method according to any one of claims 1 to 14, wherein an end time for provision of the energy and/or the power by the assisting node to the first device is determined based on an end time for communication between the first device and the second device.

16. A wireless communication method, comprising:
receiving, by a first device, a first signal transmitted by an assisting node, wherein the first signal is used for one or more of following:
providing, to the first device, energy and/or power for communication with a second device; or
waking up the first device to communicate with the second device.

17. The method according to claim 16, wherein the first signal is triggered based on a first event, and the first event is associated with one or more of following:
the second device has data to be transmitted to the first device; or
the second device instructs the assisting node to wake up the first device.

18. The method according to claim 17, wherein in a case that the first signal is used to wake up the first device to communicate with the second device, the receiving, by the first device, the first signal transmitted by the assisting node comprises:
in a case that the assisting node continuously provides energy and/or power to the first device, in response to occurrence of the first event, receiving, by the first device, the first signal transmitted by the assisting node.

19. The method according to claim 16, wherein the first signal is periodically transmitted.

20. The method according to claim 19, wherein a transmission period of the first signal is configured by the second device.

21. The method according to any one of claims 16 to 20, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

22. The method according to claim 21, wherein the first transmission resource and the second transmission resource are configured by the second device.

23. The method according to any one of claims 16 to 20, wherein a transmission opportunity associated with the assisting node is shared by the second device, or
the assisting node performs channel access.

24. The method according to any one of claims 21 to 23, wherein a communication protocol used between the assisting node and the first device is the same as a communication protocol used between the assisting node and the second device.

25. The method according to any one of claims 16 to 24, wherein an end time for provision of the energy and/or the power by the assisting node to the first device is determined based on an end time for communication between the first device and the second device.

26. A wireless communication method, comprising:
transmitting, by a second device, first indication information to an assisting node, wherein the first indication information is used to instruct the assisting node to transmit a first signal to a first device, and the first signal is used for one or more of following:
providing, to the first device, energy and/or power for communication with the second device; or
waking up the first device to communicate with the second device.

27. The method according to claim 26, wherein the first signal is triggered based on a first event, and the first event is associated with one or more of following:
the second device has data to be transmitted to the first device; or
the second device instructs the assisting node to wake up the first device.

28. The method according to claim 26, wherein the first signal is periodically transmitted.

29. The method according to claim 28, wherein a transmission period of the first signal is configured by the second device.

30. The method according to any one of claims 26 to 29, wherein in a case that the first signal is used to provide, to the first device, energy and/or power for communication with the second device, the first indication information carries first information, and the first information is used to instruct to activate the assisting node to provide the energy and/or the power for the first device.

31. The method according to claim 30, wherein the method further comprises:
transmitting, by the second device, second information to the assisting node, wherein the second information is used to instruct the assisting node to wake up the first device.

32. The method according to claim 31, wherein a transmitting time of the first information is earlier than a transmitting time of the second information, and an interval between the transmitting time of the first information and the transmitting time of the second information is a first time interval.

33. The method according to claim 32, wherein the first time interval is pre-configured based on a device type of the first device.

34. The method according to any one of claims 26 to 33, wherein the method further comprises:
receiving, by the second device, third information transmitted by the assisting node, wherein the third information is used to indicate a node type of the assisting node.

35. The method according to any one of claims 26 to 34, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

36. The method according to claim 35, wherein the first transmission resource and the second transmission resource are configured by the second device.

37. The method according to any one of claims 26 to 34, wherein a transmission opportunity associated with the assisting node is shared by the second device, or
the assisting node performs channel access.

38. The method according to any one of claims 34 to 37, wherein a communication protocol used between the assisting node and the first device is the same as a communication protocol used between the assisting node and the second device.

39. The method according to any one of claims 26 to 38, wherein an end time for provision of the energy and/or the power by the assisting node to the first device is determined based on an end time for communication between the first device and the second device.

40. A wireless communication method, comprising:
receiving, by a second device, fourth information transmitted by a first device, wherein the fourth information is used for the second device to select a first assisting node for the first device, and the first assisting node is used for one or more of following:
providing energy and/or power to the first device; or
waking up the first device.

41. The method according to claim 40, wherein the fourth information is used to indicate one or more of following:
the first assisting node;
the second device associated with the first assisting node; or
a distance between the first device and the first assisting node.

42. The method according to claim 41, wherein the fourth information is used to indicate that the first assisting node comprises the fourth information carrying an identity of the first assisting node to indicate the first assisting node.

43. The method according to any one of claims 40 to 42, wherein before the receiving, by the second device, the fourth information transmitted by the first device, the method further comprises:
transmitting, by the second device, fifth information to the first assisting node, wherein the fifth information comprises one or more of following:
an identity of the first device;
an identity of the first assisting node; or
an identity of the second device associated with the first assisting node.

44. The method according to claim 43, wherein the fifth information is used to instruct to provide energy and/or power to the first device, and/or
the fifth information is used to instruct to wake up the first device.

45. The method according to any one of claims 40 to 44, wherein the method further comprises:
in response to the fourth information, establishing, by the second device, an association relationship between the first device and the first assisting node.

46. The method according to any one of claims 40 to 45, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

47. The method according to any one of claims 40 to 46, wherein the first assisting node is one of a plurality of assisting nodes associated with the second device, and the method further comprises:
transmitting, by the second device, sixth information to the another assisting node, wherein the sixth information is used to instruct to deactivate the other assisting node, and the other assisting node is another node, other than the first assisting node, in the plurality of assisting nodes.

48. A wireless communication method, comprising:
transmitting, by a first device, fourth information to a second device, wherein the fourth information is used for the second device to select a first assisting node for the first device, and the first assisting node is used for one or more of following:
providing energy and/or power to the first device; or
waking up the first device.

49. The method according to claim 48, wherein the fourth information is used to indicate one or more of following:
the first assisting node;
the second device associated with the first assisting node; or
a distance between the first device and the first assisting node.

50. The method according to claim 49, wherein the fourth information is used to indicate that the first assisting node comprises the fourth information carrying an identity of the first assisting node to indicate the first assisting node, and the identity of the first assisting node is allocated by the second device.

51. The method according to any one of claims 48 to 50, wherein the method further comprises:
receiving, by the first device, second indication information transmitted by the first assisting node, wherein the second indication information is used to indicate the first assisting node, and/or the first assisting node is associated with the second device.

52. The method according to claim 51, wherein the second indication information is used to indicate that the first assisting node comprises the second indication information carrying an identity of the first assisting node to indicate the first assisting node.

53. The method according to claim 51 or 52, wherein the second indication information is carried in a first signal, and the first signal is used to provide, to the first device, energy and/or power for communication with the second device; and/or to wake up the first device to communicate with the second device.

54. The method according to any one of claims 48 to 53, wherein the fourth information is used to establish an association relationship between the first device and the first assisting node.

55. The method according to any one of claims 48 to 54, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

56. A wireless communication method, comprising:
transmitting, by a first assisting node, second indication information to a first device, wherein the second indication information is used to indicate the first assisting node, and/or the first assisting node being associated with a second device, and the first assisting node is used for one or more of following:
providing energy and/or power to the first device; or
waking up the first device.

57. The method according to claim 56, wherein the second indication information is carried in a first signal, and the first signal is used to provide, to the first device, energy and/or power for communication with the second device; and/or to wake up the first device to communicate with the second device.

58. The method according to claim 56 or 57, wherein the second indication information is used to indicate that the first assisting node comprises the second indication information carrying an identity of the first assisting node to indicate the first assisting node.

59. The method according to any one of claims 56 to 58, wherein the method further comprises:
receiving, by the first assisting node, fifth information transmitted by the second device, wherein the fifth information comprises one or more of following:
an identity of the first device;
an identity of the first assisting node; or
an identity of the second device associated with the first assisting node.

60. The method according to claim 59, wherein the fifth information is used to instruct to provide energy and/or power to the first device, and/or
the fifth information is used to instruct to wake up the first device.

61. The method according to any one of claims 56 to 60, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

62. A communications device, wherein the communications device is an assisting node, comprising:
a transmitting unit, configured to transmit a first signal to a first device, wherein the first signal is used for one or more of following:
providing, to the first device, energy and/or power for communication with the second device; or
waking up the first device to communicate with the second device.

63. The communications device according to claim 62, wherein the first signal is triggered based on a first event, and the first event is associated with one or more of following:
the second device has data to be transmitted to the first device; or
the second device instructs the assisting node to wake up the first device.

64. The communications device according to claim 62 or 63, wherein in a case that the first signal is used to wake up the first device for communication with the second device, the transmitting unit is configured to:
in a case that the assisting node continuously provides energy and/or power to the first device, in response to occurrence of the first event, transmit the first signal to the first device.

65. The communications device according to claim 62, wherein the first signal is periodically transmitted.

66. The communications device according to claim 65, wherein a transmission period of the first signal is configured by the second device.

67. The communications device according to any one of claims 62 to 66, wherein in a case that the first signal is used to provide, to the first device, energy and/or power for communication with the second device, the communications device further comprises:
a first receiving unit, configured to receive first information transmitted by the second device, wherein the first information is used to instruct the assisting node to provide the energy and/or the power to the first device.

68. The communications device according to claim 67, wherein the first receiving unit is configured to receive second information transmitted by the second device, and the second information is used to instruct the assisting node to wake up the first device.

69. The communications device according to claim 68, wherein a transmitting time of the first information is earlier than a transmitting time of the second information, and an interval between the transmitting time of the first information and the transmitting time of the second information is a first time interval.

70. The communications device according to claim 69, wherein the first time interval is pre-configured based on a device type of the first device.

71. The communications device according to any one of claims 62 to 70, wherein the transmitting unit is configured to:
transmit third information to the second device, wherein the third information is used to indicate a node type of the assisting node.

72. The communications device according to any one of claims 62 to 71, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

73. The communications device to claim 72, wherein the first transmission resource and the second transmission resource are configured by the second device.

74. The communications device according to any one of claims 62 to 71, wherein a transmission opportunity associated with the assisting node is shared by the second device, or
the assisting node performs channel access.

75. The communications device according to any one of claims 71 to 74, wherein a communication protocol used between the assisting node and the first device is the same as a communication protocol used between the assisting node and the second device.

76. The communications device according to any one of claims 62 to 75, wherein an end time for provision of the energy and/or the power by the assisting node to the first device is determined based on an end time for communication between the first device and the second device.

77. A communications device, wherein the communications device is a first device and comprises:
a receiving unit, configured to receive a first signal transmitted by an assisting node, wherein the first signal is used for one or more of following:
providing, to the first device, energy and/or power for communication with the second device; or
waking up the first device to communicate with the second device.

78. The communications device according to claim 77, wherein the first signal is triggered based on a first event, and the first event is associated with one or more of following:
the second device has data to be transmitted to the first device; or
the second device instructs the assisting node to wake up the first device.

79. The communications device according to claim 77, wherein in a case that the first signal is used to wake up the first device for communication with the second device, the receiving unit is configured to:
in a case that the assisting node continuously provides energy and/or power to the first device, in response to occurrence of the first event, receive the first signal transmitted by the assisting node.

80. The communications device according to claim 77, wherein the first signal is periodically transmitted.

81. The communications device according to claim 80, wherein a transmission period of the first signal is configured by the second device.

82. The communications device according to any one of claims 77 to 81, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

83. The communications device to claim 82, wherein the first transmission resource and the second transmission resource are configured by the second device.

84. The communications device according to any one of claims 77 to 81, wherein a transmission opportunity associated with the assisting node is shared by the second device, or
the assisting node performs channel access.

85. The communications device according to any one of claims 82 to 84, wherein a communication protocol used between the assisting node and the first device is the same as a communication protocol used between the assisting node and the second device.

86. The communications device according to any one of claims 77 to 85, wherein an end time for provision of the energy and/or the power by the assisting node to the first device is determined based on an end time for communication between the first device and the second device.

87. A communications device, wherein the communications device is a second device and comprises:
a transmitting unit, configured to transmit first indication information to an assisting node, wherein the first indication information is used to instruct the assisting node to transmit a first signal to a first device, and the first signal is used for one or more of following:
providing, to the first device, energy and/or power for communication with the second device; or
waking up the first device to communicate with the second device.

88. The communications device according to claim 87, wherein the first signal is triggered based on a first event, and the first event is associated with one or more of following:
the second device has data to be transmitted to the first device; or
the second device instructs the assisting node to wake up the first device.

89. The communications device according to claim 87, wherein the first signal is periodically transmitted.

90. The communications device according to claim 89, wherein a transmission period of the first signal is configured by the second device.

91. The communications device according to claim 88, wherein in a case that the first signal is used to provide, to the first device, energy and/or power for communication with the second device, the first indication information carries first information, and the first information is used to instruct to activate the assisting node to provide the energy and/or the power for the first device.

92. The communications device according to claim 91, wherein the transmitting unit is configured to:
transmit second information to the assisting node, wherein the second information is used to instruct the assisting node to wake up the first device.

93. The communications device according to claim 92, wherein a transmitting time of the first information is earlier than a transmitting time of the second information, and an interval between the transmitting time of the first information and the transmitting time of the second information is a first time interval.

94. The communications device according to claim 93, wherein the first time interval is pre-configured based on a device type of the first device.

95. The communications device according to any one of claims 87 to 94, wherein the communications device further comprises:
a first receiving unit, configured to receive third information transmitted by the assisting node, wherein the third information is used to indicate a node type of the assisting node.

96. The communications device according to any one of claims 87 to 95, wherein communication between the assisting node and the first device is based on a first transmission resource, and communication between the assisting node and the second device is based on a second transmission resource,
wherein the first transmission resource and the second transmission resource do not overlap in time domain; and/or the first transmission resource and the second transmission resource do not overlap in frequency domain.

97. The communications device to claim 96, wherein the first transmission resource and the second transmission resource are configured by the second device.

98. The communications device according to any one of claims 87 to 95, wherein a transmission opportunity associated with the assisting node is shared by the second device, or
the assisting node performs channel access.

99. The communications device according to any one of claims 94 to 98, wherein a communication protocol used between the assisting node and the first device is the same as a communication protocol used between the assisting node and the second device.

100. The communications device according to any one of claims 87 to 99, wherein an end time for provision of the energy and/or the power by the assisting node to the first device is determined based on an end time for communication between the first device and the second device.

101. A communications device, wherein the communications device is a second device and comprises:
a receiving unit, configured to receive fourth information transmitted by a first device, wherein the fourth information is used for the second device to select a first assisting node for the first device, and the first assisting node is used for one or more of following:
providing energy and/or power to the first device; or
waking up the first device.

102. The communications device according to claim 101, wherein the fourth information is used to indicate one or more of following:
the first assisting node;
the second device associated with the first assisting node; or
a distance between the first device and the first assisting node.

103. The communications device according to claim 102, wherein the fourth information is used to indicate that the first assisting node comprises the fourth information carrying an identity of the first assisting node to indicate the first assisting node.

104. The communications device according to any one of claims 101 to 103, wherein before the second device receives the fourth information transmitted by the first device, the communications device further comprises:
a first transmitting unit, configured to transmit fifth information to the first assisting node, wherein the fifth information comprises one or more of following:
an identity of the first device;
an identity of the first assisting node; or
an identity of the second device associated with the first assisting node.

105. The communications device according to claim 104, wherein the fifth information is used to instruct to provide energy and/or power to the first device, and/or
the fifth information is used to instruct to wake up the first device.

106. The communications device according to any one of claims 101 to 105, wherein the communications device further comprises:
a processing unit, configured to: in response to the fourth information, establish an association relationship between the first device and the first assisting node.

107. The communications device according to any one of claims 101 to 106, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

108. The communications device according to any one of claims 101 to 107, wherein the first assisting node is one of a plurality of assisting nodes associated with the second device, and the communications device further comprises:
a second transmitting unit, configured to transmit sixth information to the another assisting node, wherein the sixth information is used to instruct to deactivate the other assisting node, and the other assisting node is another node, other than the first assisting node, in the plurality of assisting nodes.

109. A communications device, wherein the communications device is a first device and comprises:
a transmitting unit, configured to transmit fourth information to a second device, wherein the fourth information is used for the second device to select a first assisting node for the first device, and the first assisting node is used for one or more of following:
providing energy and/or power to the first device; or
waking up the first device.

110. The communications device according to claim 109, wherein the fourth information is used to indicate one or more of following:
the first assisting node;
the second device associated with the first assisting node; or
a distance between the first device and the first assisting node.

111. The communications device according to claim 110, wherein the fourth information is used to indicate that the first assisting node comprises the fourth information carrying an identity of the first assisting node to indicate the first assisting node, and the identity of the first assisting node is allocated by the second device.

112. The communications device according to claim 110 or 111, wherein the communications device further comprises:
a first receiving unit, configured to receive second indication information transmitted by the first assisting node, wherein the second indication information is used to indicate the first assisting node, and/or the first assisting node is associated with the second device.

113. The communications device according to claim 112, wherein the second indication information is used to indicate that the first assisting node comprises the second indication information carrying an identity of the first assisting node to indicate the first assisting node.

114. The communications device according to claim 112 or 113, wherein the second indication information is carried in a first signal, and the first signal is used to provide, to the first device, energy and/or power for communication with the second device; and/or to wake up the first device to communicate with the second device.

115. The communications device according to any one of claims 109 to 114, wherein the fourth information is used to establish an association relationship between the first device and the first assisting node.

116. The communications device according to any one of claims 109 to 115, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

117. A communications device, wherein the communications device is a first assisting node, comprising:
a transmitting unit, configured to transmit second indication information to a first device, wherein the second indication information is used to indicate the first assisting node, and/or the first assisting node being associated with a second device, and the first assisting node is used for one or more of following:
providing energy and/or power to the first device; or
waking up the first device.

118. The communications device according to claim 117, wherein the second indication information is carried in a first signal, and the first signal is used to provide, to the first device, energy and/or power for communication with the second device; and/or to wake up the first device to communicate with the second device.

119. The communications device according to claim 117 or 118, wherein the second indication information is used to indicate that the first assisting node comprises the second indication information carrying an identity of the first assisting node to indicate the first assisting node.

120. The communications device according to any one of claims 117 to 119, wherein the communications device further comprises:
a receiving unit, configured to receive fifth information transmitted by the second device, wherein the fifth information comprises one or more of following:
an identity of the first device;
an identity of the first assisting node; or
an identity of the second device associated with the first assisting node.

121. The communications device according to claim 120, wherein the fifth information is used to instruct to provide energy and/or power to the first device, and/or
the fifth information is used to instruct to wake up the first device.

122. The communications device according to any one of claims 117 to 121, wherein the first assisting node is one of a plurality of assisting nodes associated with the second device, a distance between the first assisting node and the first device is less than a distance between another assisting node and the first device, and the another assisting node is another node, other than the first assisting node, in the plurality of assisting nodes.

123. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 61.

124. An apparatus, comprising a processor configured to invoke a program from a memory, to cause the apparatus to execute the method according to any one of claims 1 to 61.

125. A chip, comprising a processor, configured to invoke a program from a memory to cause a device installed with the chip to execute the method according to any one of claims 1 to 61.

126. A computer-readable storage medium, wherein the computer-readable storage medium stores a program, and the program causes a computer to execute the method according to any one of claims 1 to 61.

127. A computer program product, comprising a program that causes a computer to execute the method according to any one of claims 1 to 61.

128. A computer program, wherein the computer program causes a computer to execute the method according to any one of claims 1 to 61.
